# EUROPÄISCHE PATENTANMELDUNG

(11) **EP 4 015 320 A2**
(43) Veröffentlichungstag der Anmeldung: **22.06.2022**
(21) Anmeldenummer: 21213953.9
(22) Anmeldetag: 13.12.2021
(51) Int. Cl.: B60T 5/00, F16D 65/00, F16D 51/00

(54) **SCHALLDÄMPFUNGSANORDNUNG FÜR EINE SCHEIBENBREMSANORDNUNG UND SCHEIBENBREMSANORDNUNG**

(30) Priorität: 17.12.2020 DE 102020133938
(71) Anmelder: MANN+HUMMEL GmbH, 71636 Ludwigsburg (DE)
(72) Erfinder: Kümmerling, Volker, 74321 Bietigheim-Bissingen (DE); Bock, Lukas, 74321 Bietigheim-Bissingen (DE); Jessberger, Thomas, 71679 Asperg (DE); Tilg, Jürgen, 74930 Ittlingen (DE)
(74) Vertreter: Mann + Hummel Intellectual Property

(57) **Zusammenfassung**

Die Erfindung betrifft eine Schalldämpfungsanordnung (100) für eine einen Bremssattel (210) und eine Bremsscheibe (220) umfassende Scheibenbremsenanordnung (200) und eine Scheibenbremsanordnung (200) mit einer solchen Schalldämpfungsanordnung (100), mit einem Gehäuse (110) mit Gehäusewänden (111, 113, 115) zur zumindest teilweisen Aufnahme der Bremsscheibe (220) in einem Gehäuseinnenraum (112), wobei an dem Gehäuse (110) wenigstens ein Dämpfungsmittel (120) zur Dämpfung von Luftschallwellen angeordnet ist.

## Beschreibung

### Technisches Gebiet

Die Erfindung betrifft eine Schalldämpfungsanordnung für eine Scheibenbremsenanordnung, die einen Bremssattel und eine Bremsscheibe umfasst. Die Erfindung betrifft ferner eine Scheibenbremsanordnung mit einer solchen Schalldämpfungsanordnung.

### Stand der Technik

Scheibenbremsenanordnungen mit einem Bremssattel und einer Bremsscheibe sind dem Fachmann bekannt und werden sowohl für mobile als auch stationäre Anwendungen verwendet. Bei den mobilen Anwendungen können die Scheibenbremsanordnungen beispielsweise in PKW, LKW, Bussen, Motorräder, Scooter, Roller, Fahrräder und Schienenfahrzeugen eingesetzt werden. Stationär können die Scheibenbremsanordnungen beispielsweise bei Windkraftanlagen eingesetzt werden.

Die Ausbildung von Störgeräuschen im Betrieb von Scheibenbremsanordnungen ist ebenfalls bekannt, hierbei können Schwingungen im unteren Frequenzbereich auf die mechanischen und nicht reibungstechnischen Geräuschauslöser zurückgeführt werden. Sie werden hervorgerufen durch den exzentrischen Bremskraftangriff und dem dadurch verursachten Spiel von Bremselementen des Bremssattels in Umfangsrichtung. Eine weitere Quelle für Schwingungen im unteren Frequenzbereich stellt die Quermitnahme eines Betätigungskolbens dar. Auch der durch die rotationsunsymmetrische Belastung entstehende Taumelschlag einer Bremsscheibe erzeugt Geräusche. Die im oberen Frequenzbereich auftretenden Störgeräusche auslösenden Schwingungen rühren vom Reibschluss zwischen Reibbelag der Bremselemente und Bremsscheibe her.

Schalldämpfungsanordnungen für Scheibenbremsanordnungen um Störgeräusche zu reduzieren oder zu vermeiden sind dem Fachmann ebenfalls bekannt. Diese Schalldämpfungsanordnungen können Körperschallreduzieren, welcher über Bremssattel und/oder Bremsscheibe und/oder Gehäuse übertragen werden. Hierbei können optional an Bremselementen des Bremssattels und/oder an anderen Bauteilen des Bremssattels und/oder an der Bremsscheibe Dämpfungselemente angeordnet werden, welche eine Ausbildung von Schwingungen und/oder eine Ausbreitung von Schwingen erschweren und dadurch die Ausbildung von Schallwellen und das Entstehen von Störgeräuschen erschweren.

Aus der DE4021093 A1 ist eine Geräusch- und wärmeisolierende Dämmplatte für Teilbelagscheibenbremsen bekannt, wobei die Dämmplatte eine Metallplatte umfasst, welche beidseitig mit einem, mit wärmeresistentem Phenolharz oder Elastomer imprägnierten und friktionierten Papier, Vlies oder Gewebe beschichtet ist.

### Offenbarung der Erfindung

Eine Aufgabe der Erfindung ist es, eine Schalldämpfungsanordnung für eine Scheibenbremsenanordnung, die einen Bremssattel und eine Bremsscheibe umfasst, zu schaffen, welche Geräusche reduziert.

Eine weitere Aufgabe ist die Bereitstellung einer Scheibenbremsanordnung, welche im Betrieb weniger Geräusche emittiert.

Die vorgenannte Aufgabe wird nach einem Aspekt der Erfindung dadurch gelöst, dass ein Gehäuse der Schalldämpfungsanordnung mit wenigstens einem Dämpfungsmittel zur Dämpfung von Luftschallwellen gekoppelt ist.

Die weitere Aufgabe wird nach einem weiteren Aspekt der Erfindung gelöst von einer Scheibenbremsanordnung, welche eine Schalldämpfungsanordnung mit einem Gehäuse umfasst, welches mit wenigstens einem Dämpfungsmittel zur Dämpfung von Luftschallwellen gekoppelt ist.

Günstige Ausgestaltungen und Vorteile der Erfindung ergeben sich aus den weiteren Ansprüchen, der Beschreibung und der Zeichnung.

Es wird nach einem Aspekt der Erfindung eine Schalldämpfungsanordnung für eine Scheibenbremsenanordnung, die einen Bremssattel und eine Bremsscheibe umfasst, mit einem Gehäuse mit Gehäusewänden zur zumindest teilweisen Aufnahme der Bremsscheibe in einem Gehäuseinnenraum vorgeschlagen, wobei an dem Gehäuse wenigstens ein Dämpfungsmittel zur Dämpfung von Luftschallwellen angeordnet ist.

Das Gehäuse der erfindungsgemäßen Schalldämpfungsanordnung ist insbesondere ein von den sonstigen Bestandteilen der Scheibenbremsenanordnung separates Gehäuse und insbesondere separat von einem Spritzschutzblech der Scheibenbremsenanordnung ausgebildet. Das wenigstens eine Dämpfungsmittel zur Dämpfung von Luftschallwellen ist nun an diesem separaten Gehäuse angeordnet.

Die Schalldämpfungsanordnung kann in vorteilhafter Weise Luftschallwellen, welche im Bereich der Scheibenbremsanordnung, insbesondere Luftschallwellen, welche in der Betriebsstellung der Scheibenbremsenanordnung entstehen, dämpfen.

Luftschallwellen bzw. Geräusche insbesondere Störgeräusche können durch Reibung zwischen dem Bremssattel bzw. zwischen den Bremselementen des Bremssattels und der Bremsscheibe entstehen. Dadurch, dass die Schwingungen, welche über die Luft im Gehäuseinnenraum als Schallwellen übertragen werden, durch die Kopplung des Gehäuses mit dem wenigstens einem Dämpfungsmittel gedämpft werden können, können Geräusche, insbesondere als störend empfundene Geräusche, reduziert und vermieden werden. Zudem kann eine Schwingungsanregung von Gehäusewänden oder anderen Bauteilen durch das Dämpfen der Luftschallwellen vermieden oder erschwert werden. Hierbei kann auf zusätzliche Schwingungsdämpfer an den Bremselementen und/oder an anderen Bauteilen des Bremssattels und/oder an der Bremsscheibe verzichtet werden.

Unter einem Gehäuse kann ein Bauteil verstanden werden, welches die Bremsscheibe komplett oder teilweise abdeckt. Das Gehäuse kann insbesondere ringsegmentförmig zur zumindest teilweisen Aufnahme der Bremsscheibe ausgebildet sein.

Unter einer Betriebsstellung der Scheibenbremsanordnung wird die Stellung verstanden, in welcher die Bremselemente des Bremssattels mit der Bremsscheibe in Kontakt stehen. Die Bremsscheibe kann beispielsweise aus Stahl oder Keramik ausgebildet sein. Bei beiden Materialien entstehen in der Betriebsstellung Geräusche. Bei beiden Materialien können sich zudem in der Betriebsstellung Partikel lösen.

Gemäß einer günstigen Ausgestaltung kann das wenigstens eine Dämpfungsmittel als nach außen geschlossenes Rohr ausführt sein, welches an dem Gehäuse angeordnet und mit dem Gehäuseinnenraum gekoppelt ist, insbesondere wobei das wenigstens eine Rohr als akustisch wirkendes λ/4-Rohr ausgebildet ist. In einer günstigen Ausgestaltung kann das Rohr an einer Gehäuseseitenwand angeordnet sein. Hierbei kann das Rohr gebogen, beispielsweise um neunzig Grad gebogen sein. Dadurch kann die Längserstreckung des Rohres im Wesentlichen parallel zur Fläche der Gehäuseseitenwand verlaufen, wodurch eine platzsparende Anordnung des wenigstens einen Rohrs am Gehäuse ermöglicht werden kann. Die Luftsäule in dem wenigstens einen Rohr kann zu Schwingungen angeregt werden, welche der Luftschallwelle im Gehäuseinnenraum entgegenwirkt, wodurch mit einfachen Mitteln der Luftschall im Gehäuse reduziert werden kann. Hierbei können mehrere Rohre am Gehäuse für verschiedene zu dämpfende Frequenzen der Luftschallwellen im Gehäuseinnenraum vorgesehen sein. Dadurch können Luftschallwellen mit störenden Frequenzen oder Luftschallwellen mit Frequenzen, welche andere Bauteile zum Schwingen anregen, gezielt durch wenigstens ein korrespondierendes Rohr gedämpft werden. Die Rohre können einen runden Querschnitt aufweisen, es sind aber auch andere Querschnitte vorstellbar. In einer bevorzugten Ausführung weisen die Rohre dasselbe Material auf wie das Gehäuse. Dadurch können die Rohre einfach an das Gehäuse angeformt werden, alternativ können die Rohre einteilig mit dem Gehäuse hergestellt werden. Das Material kann Metall sein. Es ist auch Kunststoff möglich. Die Rohre können an das Gehäuse angeschweißt oder angeschraubt werden.

Gemäß einer günstigen Ausgestaltung kann an dem Gehäuse wenigstens ein Hohlkörper angeordnet sein, insbesondere an wenigstens einer Seitenwand angeordnet sein. Der Hohlkörper weist eine Durchgangsöffnung zu dem vom Gehäuse umschlossenen Gehäuseinnenraum so auf, dass ein Hohlraum des Hohlkörpers akustisch mit dem Gehäuseinnenraum kommuniziert, insbesondere wobei der Hohlraum mit der Durchgangsöffnung als Dämpfungsmittel in Form eines Helmholtzresonators ausgebildet ist. Hierbei können mehrere Hohlköper über entsprechende korrespondierende Durchgangsöffnungen mit dem Gehäuseinnenraum gekoppelt werden. Die Durchgangsöffnungen können als Rohre ausgebildet sein, welche den jeweiligen Hohlraum mit dem Gehäuseinnenraum verbinden. Hierbei können die Durchgangsöffnungen verschiedene Abmessungen aufweisen, wobei sich die Durchgangsöffnungen in den Querschnitten und Längen unterscheiden können. Die Luftschalldämpfung erfolgt, indem die Luftmasse in den Durchgangsöffnungen gegen die Luftfeder im Hohlkörper durch die Luftschallwelle im Gehäuseinnenraum zum Schwingen angeregt wird. Hierbei wird Schallenergie der Luftschallwelle in kinetische Energie der schwingenden Luftmasse umgewandelt und die Luftschallwelle wird absorbiert. Da die Anregungsfrequenz der Luftmasse in den Durchgangsöffnungen unter anderem von deren Abmessungen abhängig ist und die Federkraft der Luftfeder unter anderem vom Volumen des Hohlraums abhängt, können diese Parameter so eingestellt werden, dass Luftschallwellen mit einer bestimmten Frequenz absorbiert werden. Hier bei können mehrere Durchgangsöffnungen so auf einander abgestimmt werden, dass mehrere Resonanzfrequenzen nebeneinander liegen und so eine breitbandige Absorption erzielt werden kann. Zusätzlich kann die Luftmasse in den Durchgangsöffnungen durch Reibung gebremst werden. Zu diesem Zweck kann ein dünnes Vlies, optional versehen mit einer zusätzlichen Auflage aus Mineralwolle oder Schaumstoff, zwischen der Durchgangsöffnung und dem Hohlraum oder in der Durchgangsöffnung angeordnet werden.

Gemäß einer günstigen Ausgestaltung kann an einer Innenseite und/oder Außenseite des Gehäuses wenigstens ein akustisch wirksames Material, angeordnet sein. Das akustisch wirksame Material kann effektiv Luftschallwellen dämpfen. Beispielsweise kann bei einer zu dämpfenden Luftschallwelle mit 5000 Hz der Schallabsorptionskoeffizient Alpha eines akustisch wirksamen Materials mit einer Dicke von 10 mm größer als 0.2 (20%) sein. Das akustisch wirksame Material kann beispielsweise einem Vlies entsprechen.

Gemäß einer günstigen Ausgestaltung kann das Gehäuse ein Innengehäuse umschließen, welches wenigstens eine Durchgangsöffnung so aufweist, dass ein vom Innengehäuse umgebener erster Innenraum akustisch mit einem zweiten Innenraum kommuniziert, welcher zwischen Innengehäuse und Gehäuse ausgebildet ist, wobei im zweiten Innenraum wenigstens als Dämpfungsmittel in Form eines Breitbanddämpfers ausgebildet ist. Die wenigstens eine Durchgangsöffnung am Innengehäuse kann am Gehäuseumfangswandabschnitt angeordnet sein. Die beiden Innenräume sind Teilräume eines Gehäuseinnenraums, welcher von dem Gehäuse umschlossen wird. Die Öffnungen können als Schlitze ausgeführt werden, zudem können die Öffnungen rund oder länglich ausgebildet werden. Der zweite Innenraum zwischen dem Innengehäuse und dem Gehäuse kann durch Zwischenwände weiter unterteilt werden, so dass mehrere akustisch wirksame Kammern gebildet werden können. Hierbei können sich in den akustisch wirksamen Kammern Luftsäulen ausbilden, welche von den Luftschallwellen angeregt werden und gegeneinander schwingen, so dass die Luftschellwellen in dem Gehäuseinnenraum gedämpft werden können. Die Kammern können sich in ihren Volumen unterscheiden, so dass die Luftsäulen verschiedene Volumen und dadurch verschiedene Eigenresonanzen aufweisen.

Das Gehäuse umschließt die Bremsscheibe im Wesentlichen U-förmig, wobei sich die Gehäuseseitenwände im Wesentlichen parallel zur Bremsscheibe erstrecken und ein zwischen den Gehäuseseitenwänden angeordneter Gehäuseumfangswandabschnitt sich radial außen in Umfangsrichtung des Gehäuses erstreckt. Hierbei wird unter den Gehäuseseitenwänden eine Wand des Gehäuses verstanden, welche in einer Montageanordnung der Scheibenbremsanordnung normal zu einer Drehachse der Bremsscheibe verlaufen bzw. parallel zu einer Reiboberfläche der Bremsscheibe verlaufen kann.

In einer alternativen Ausgestaltung kann das Gehäuse die Bremsscheibe in einer anderen geeigneten Art und Weise zumindest teilweise umschließen, beispielsweise mit Gehäuseseitenwänden, die nur bereichsweise oder gar nicht parallel zur Bremsscheibe angeordnet sind. Der Fachmann jeweils wird eine günstige Ausgestaltung wählen.

Hierbei umschließt das Gehäuse den Gehäuseinnenraum, in welchem sich Luftschallwellen ausbreiten können. Das Gehäuse ist hierbei nicht vom Winkelmaß des Bremssattels abhängig. Das Gehäuse kann dem Bremssattel vorgeschaltet oder nachgeschaltet sein. Das Gehäuse kann in einer günstigen Ausgestaltung ein Material aufweisen, welches auch bei einer Temperatur von mehr als 600°C stabil ist, um den Temperaturen in unmittelbarer Umgebung einer Scheibenbremsenanordnung widerstehen zu können. Materialien, welche über eine hinreichende Temperaturbeständigkeit verfügen, sind beispielsweise Metallbleche, bevorzugt Stahlbleche. Es besteht aber auch die Möglichkeit, das Gehäuse aus einem temperaturbeständigen Kunststoff zu fertigen. Stahlblech als Material für das Gehäuse hat den weiteren Vorteil, dass das Gehäuse durch einen einfachen Umformprozess gefertigt werden kann, beispielsweise durch Tiefziehen. Kunststoffgehäuse können einfach über einen Gießprozess und/oder Spritzprozess und/oder Druckprozess geformt werden. Eine Kombination aus verschiedenen Materialien und/oder Herstellungsprozessen für das Gehäuse ist ebenfalls vorstellbar. Der Fachmann jeweils wird eine günstige Ausgestaltung wählen.

Gemäß einer günstigen Ausgestaltung kann der Gehäuseumfangswandabschnitt wenigstens eine Durchgangsöffnung aufweisen. Über die Durchgangsöffnung können die Luftschallwellen aus dem Gehäuse austreten. Zudem kann sich eine Frequenz der Luftschallwellen in dem Gehäuseinnenraum durch die Öffnung in Bereiche verschieben, welche nicht als störend wahrgenommen werden. Des Weiteren können über die Durchgangsöffnungen Schallwellen in das Gehäuse eintreten, welche die Schallwellen im Gehäuse dämpfen. Beispielsweise können über die Durchgangsöffnung verschiedene Volumina miteinander akustisch kommunizieren.

Gemäß einer günstigen Ausgestaltung kann das Gehäuse sich wenigstens teilweise über den Bremssattel erstrecken. Dadurch weist das Gehäuse zusätzliche Wandabschnitte und ein zusätzliches Volumen im Gehäuseinnenraum auf, welche zur Dämpfung der Luftschallwellen genutzt werden können. Beispielsweise kann an wenigstens einen korrespondierenden Gehäusewandabschnitt wenigstens ein weiteres Rohr angeordnet werden oder der wenigstens eine Gehäusewandabschnitt kann mit wenigstens einem weiteren Helmholzresonator gekoppelt werden. Zudem kann wenigstens eine weitere akustisch wirksame Kammer in diesem Gehäuseabschnitt ausgebildet werden.

Gemäß einer günstigen Ausgestaltung kann das Gehäuse einen Partikelfilter aufweisen. Der Partikelfilter umfasst beispielsweise ein Partikelfiltermedium, das zumindest einen Teil einer inneren Oberfläche des Gehäuses auskleidet. Hierbei wird die Schalldämpfungsfunktion mit einer Filterfunkton kombiniert. In vorteilhafter Weise kann das Gehäuse für den Bremsstaubpartikelfilter eingespart werden, wenn ein Filtermedium des Partikelfilters im Gehäuse der. Schalldämpfungsanordnung angeordnet ist. Das Filtermedium kann vorzugsweise derart ausgebildet sein, dass es auch bei einer Temperatur von mehr als 600°C stabil ist, um den Temperaturen in unmittelbarer Umgebung einer Bremsscheibe widerstehen zu können. Das Filtermedium kann dabei ein Metall, ein Metallfaservlies, Glas, Keramik und/oder einen hochtemperaturbeständigen Kunststoff, insbesondere Polyetheretherketon, aufweisen. Das Gehäuse kann dem Bremssattel vorgeschaltet oder nachgeschaltet sein. Ist ein Filtermedium vorhanden und dadurch eine Partikelfilterfunktion umsetzbar, ist ein Nachschalten sinnvoll, um gelöste Partikel aufzunehmen.

Vorteilhaft kann das Partikelfiltermedium des Partikelfilters sogar die Schalldämpfungsfunktion unterstützen. Dies ist insbesondere der Fall, wenn als Partikelfiltermedium poröse Materialien wie etwa Schäume oder Vliese eingesetzt werden.

Beispielsweise können eine oder mehrere zumindest in einer der Gehäuseseitenwände und/oder dem Gehäuseumfangswandabschnitt vorliegende Durchgangsöffnungen zumindest teilweise mit einem Filtermedium belegt sein.

Es wird nach einem weiteren Aspekt der Erfindung eine Scheibenbremsenanordnung mit einem Bremssattel, einer Bremsscheibe und einer Schalldämpfungsanordnung vorgeschlagen, wobei die Schalldämpfungsanordnung ein Gehäuse mit Gehäusewänden zur zumindest teilweisen Aufnahme der Bremsscheibe in einem Gehäuseinnenraum umfasst, wobei das Gehäuse mit wenigstens einem Dämpfungsmittel zur Dämpfung von Luftschallwellen gekoppelt ist. Hierbei können mehrere Dämpfungsmittel miteinander kombiniert werden. Optional kann die Schalldämpfungsanordnung mit einem Partikelfilter kombiniert sein. Günstigerweise kann ein Filtermedium im Gehäuse der Schalldämpfungsanordnung vor Durchgangsöffnungen angeordnet sein.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Seitenansicht eines ersten Ausführungsbeispiels einer Scheibenbremsenanordnung mit einem ersten Ausführungsbeispiel einer Schalldämpfungsanordnung;
- Fig. 2: eine Frontansicht der Scheibenbremsenanordnung aus Figur 1;
- Fig. 3: eine Draufsicht der Schalldämpfungsanordnung aus Figur 1 und 2;
- Fig. 4: eine Seitenansicht eines zweiten und dritten Ausführungsbeispiels einer Scheibenbremsenanordnung mit einem zweiten und dritten Ausführungsbeispiel einer Schalldämpfungsanordnung deren wenigstens eines Dämpfungsmittel 120 innen angeordneten ist;
- Fig. 5: eine teilweise geschnittene perspektivische Darstellung des zweiten Ausführungsbeispiels der Scheibenbremsenanordnung aus Figur 4 mit einem zweiten Ausführungsbeispiel der Schalldämpfungsanordnung.
- Fig. 6: eine Schnittdarstellung der Schalldämpfungsanordnung aus Figur 5.
- Fig. 7: eine Seitenansicht eines vierten Ausführungsbeispiels einer Scheibenbremsenanordnung mit einem vierten Ausführungsbeispiel einer Schalldämpfungsanordnung;
- Fig. 8: einen Schnitt durch einen über den Bremssattel gezogenen Gehäuseabschnitt der Schalldämpfungsanordnung aus Figur 7.
- Fig. 9: eine Schnittdarstellung des dritten Ausführungsbeispiels einer Schalldämpfungsanordnung aus Figur 4;
- Fig. 10: eine Seitenansicht eines fünften Ausführungsbeispiels einer Scheibenbremsenanordnung mit einem fünften Ausführungsbeispiel einer Schalldämpfungsanordnung;
- Fig. 11: eine Frontansicht der Scheibenbremsenanordnung aus Figur 10;
- Fig. 12: Draufsicht einer Schalldämpfungsanordnung aus Figur 10 und 11; und
- Fig. 13: eine Schnittdarstellung eines sechsten Ausführungsbeispiels einer Schalldämpfungsanordnung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

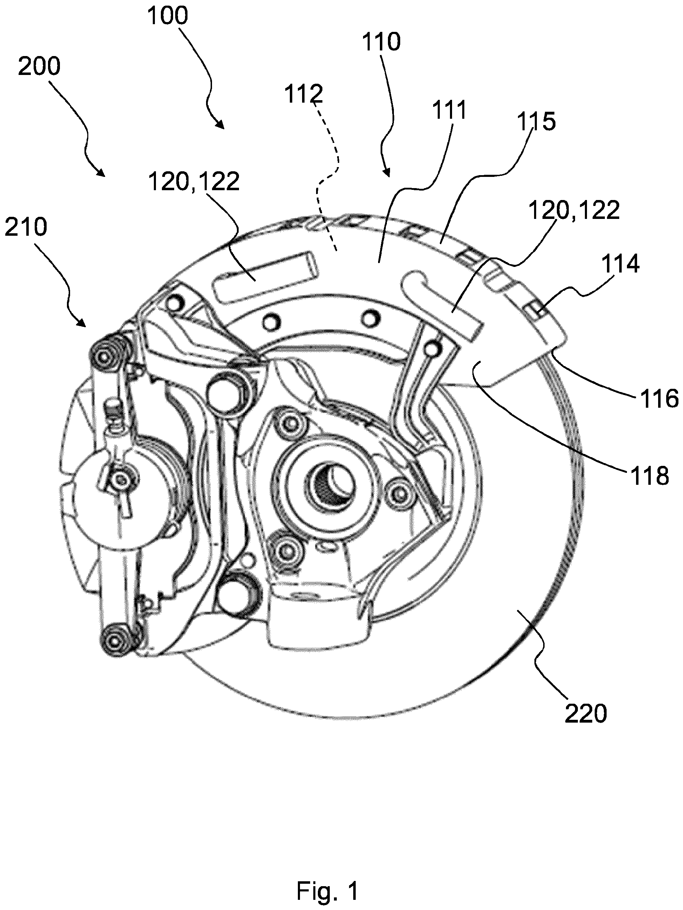

Wie aus den Figuren 1, 2, 4, 5, 7, 9 und 10 ersichtlich ist, weisen die dargestellten Ausführungsbeispiele der Scheibenbremsenanordnung 200 jeweils einen Bremssattel 210, eine Bremsscheibe 220 und eine Schalldämpfungsanordnung 100 auf. Die Ausführungsbeispiele unterscheiden sich durch die Ausführung der Schalldämpfungsanordnung 100. Selbstverständlich sind auch andere Abmessungen der Bremsscheibe 220 und des Bremssattels 210 als die dargestellten umsetzbar.

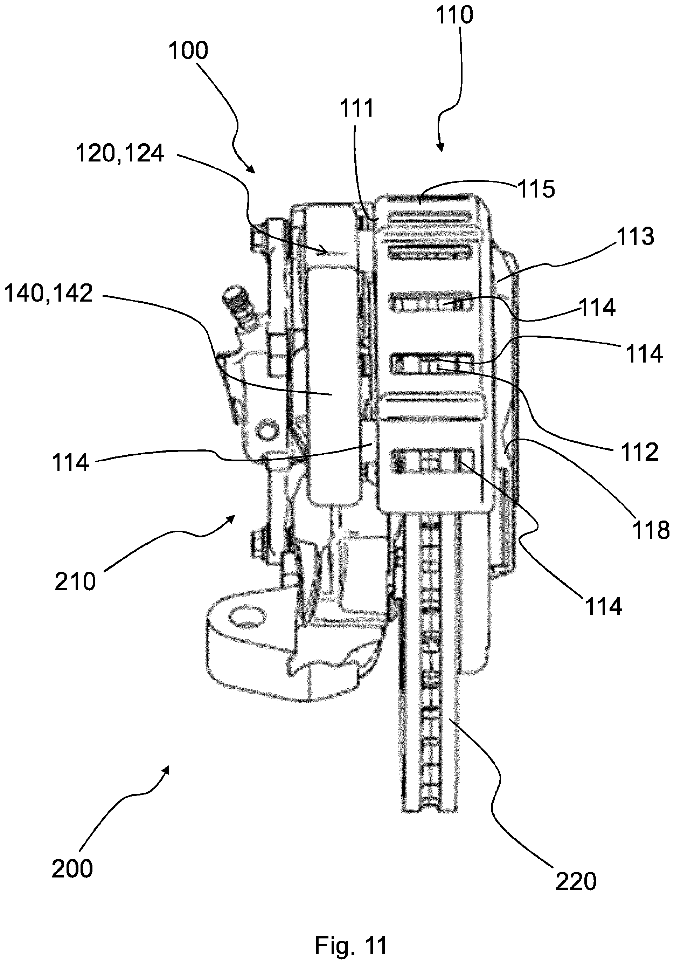

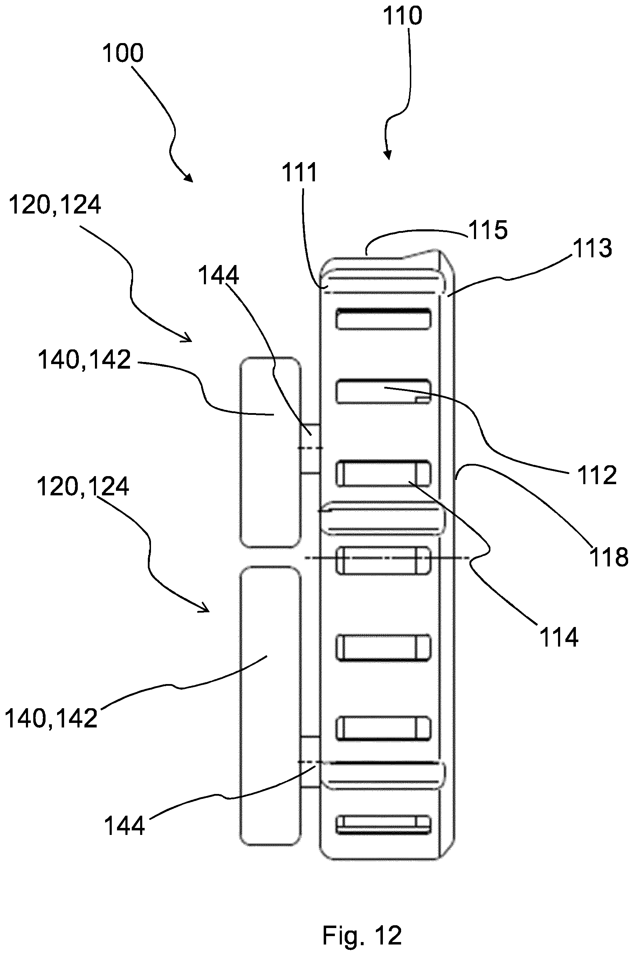

Die Figuren 1 bis 13 zeigen verschiedene Ausführungsbeispiele einer Schalldämpfungsanordnung 100 für eine einen Bremssattel 210 und eine Bremsscheibe 220 umfassende Scheibenbremsenanordnung 200. Die dargestellten Ausführungsbeispiele der Schalldämpfungsanordnung 100 umfassen ein ringsegmentförmig ausgebildetes Gehäuse 110 mit Gehäusewänden 111, 113, 115 zur zumindest teilweisen Aufnahme der Bremsscheibe 220 in einem Gehäuseinnenraum 112, wobei das Gehäuse 110 mit wenigstens einem Dämpfungsmittel 120 zur Dämpfung von Luftschallwellen gekoppelt ist. Die dargestellten Ausführungsbeispiele unterscheiden sich in der Ausführung der Dämpfungsmittel 120 und in der Ausgestaltung des Gehäuses 110. Hierbei können die verschiedenen dargestellten Dämpfungsmittel 120 in nicht dargestellten Ausführungsbeispielen miteinander kombiniert werden. Zudem können die Ausgestaltungen des Gehäuses 110 miteinander kombiniert und mit den Ausgestaltungen der Dämpfungsmittel 120 kombiniert werden.

Wie aus den Figuren 1 bis 13 weiter ersichtlich ist, umschließt das Gehäuse 110 in den dargestellten Ausführungsbeispielen die Bremsscheibe 220 im Wesentlichen U-förmig. Die Gehäuseseitenwände 111, 113 erstrecken sich parallel zur Bremsscheibe 220. Ein zwischen den axial voneinander beabstandeten Gehäuseseitenwänden 111, 113 angeordneter Gehäuseumfangswandabschnitt 115 erstreckt sich radial nach außen in Umfangsrichtung des Gehäuses 110. Das Gehäuse 110 deckt in den dargestellten Ausführungsbeispielen lediglich einen Abschnitt der Bremsscheibe 220 ab. In einem alternativen, nicht dargestellten Ausführungsbeispiel kann die Bremsscheibe 220 komplett von dem Gehäuse 110 abgedeckt sein. Das Gehäuse 110 ist nicht vom Winkelmaß des Bremssattels 210 abhängig. Das Gehäuse 110 umschließt zumindest teilweise einen Gehäuseinnenraum 112, in welchem sich Luftschallwellen ausbreiten können. Es sind auch andere, weniger platzsparende Ausrichtungen und Anordnungen der Gehäusewände 111, 113, 115 vorstellbar. Das Gehäuse 110 weist in den dargestellten Ausführungsbeispielen ein Material auf, welches auch bei einer Temperatur von mehr als 600°C stabil ist, um den Temperaturen in unmittelbarer Umgebung der Bremsscheibe widerstehen zu können. Materialien, welche über eine hinreichende Temperaturbeständigkeit verfügen sind Metallbleche, bevorzugt Stahlbleche. Es besteht aber auch die Möglichkeit das Gehäuse 110 aus einem temperaturbeständigen Kunststoff zu fertigen oder aus einer Kombination aus geeigneten Materialien. Ein Gehäuse 110 aus Stahlblech kann in einem einfachen Umformprozess gefertigt werden, beispielsweise durch Tiefziehen. Ein Gehäuse 110 aus Kunststoff kann einfach durch einen Gießprozess oder Spritzprozess oder Druckprozess geformt werden.

In einer Betriebsstellung, in welcher Bremselemente der des Bremssattels 210 gegen die Bremsscheibe 220 drücken, kann durch die Reibung zwischen dem Bremssattel 210 und der Bremsscheibe 220 Geräusche entstehen. Die Schalldämpfungsanordnung 100 dämpft unteranderem korrespondierende Luftschallwellen im Gehäuseinnenraum 112.

Das Gehäuse 110 kann einen nicht dargestellten Partikelfilter aufweisen. Hierbei wird die Schalldämpfungsfunktion mit einer Filterfunkton kombiniert. Der Partikelfilter umfasst wenigstens ein Filtermedium, welches vorzugsweise derart ausgebildet ist, dass es auch bei einer Temperatur von mehr als 600°C stabil ist, um den Temperaturen in unmittelbarer Umgebung einer Bremsscheibe 220 widerstehen zu können. Das Filtermedium kann dabei ein Metall, ein Metallfaservlies, Glas, Keramik und/oder einen hochtemperaturbeständigen Kunststoff, insbesondere Polyetheretherketon, aufweisen. Das Gehäuse 110 ist bezüglich des Bremssattels 210 ortsfest angebracht, insbesondere kann es an einem Radträger, einem Federbein, einem Spritzschutzblech oder ähnlichen Vorrichtungsbestandteilen eines Fahrzeugs befestigt sein. Das Gehäuse 110 kann dem Bremssattel 210 vorgeschaltet oder nachgeschaltet sein. Ist ein Partikelfilter vorhanden und dadurch eine Partikelfilterfunktion umsetzbar, ist ein Nachschalten des Gehäuses 110 in Drehrichtung der Bremsscheibe 220 sinnvoll, um gelöste Partikel aufzunehmen.

Die Bremsscheibe 220 kann aus Stahl oder Keramik oder einem anderen geeigneten Material ausgebildet sein. Bei allen Ausführungen der Bremsscheibe 220 können in der Betriebsstellung Geräusche, zum Beispiel ein Quietschen, entstehen. In der Betriebsstellung können sich von den Bremsscheiben 220 zudem Partikel lösen. Üblicherweise lösen sich bei Keramikbremsscheiben 220 deutlich weniger Partikel als von Stahlbremsscheiben 220. Dadurch kann insbesondere bei Stahlbremsscheiben 220 eine Aufnahme eines Partikelfilters günstig sein, während bei Keramikbremsscheiben 220 je nach Ausführung der Bremselemente des Bremssattels 220 auf den Partikelfilter verzichtet werden kann.

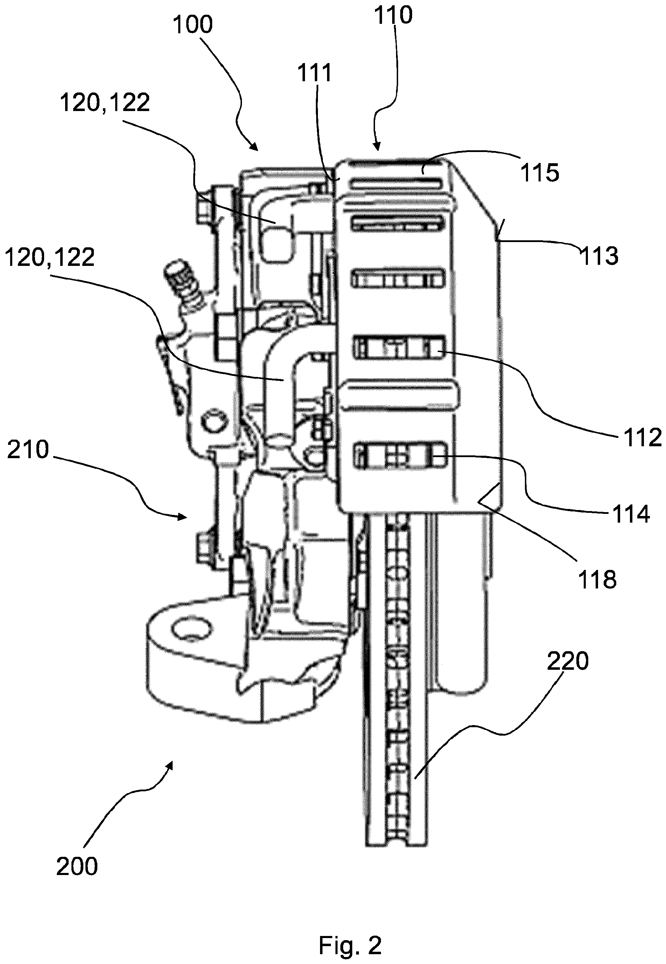

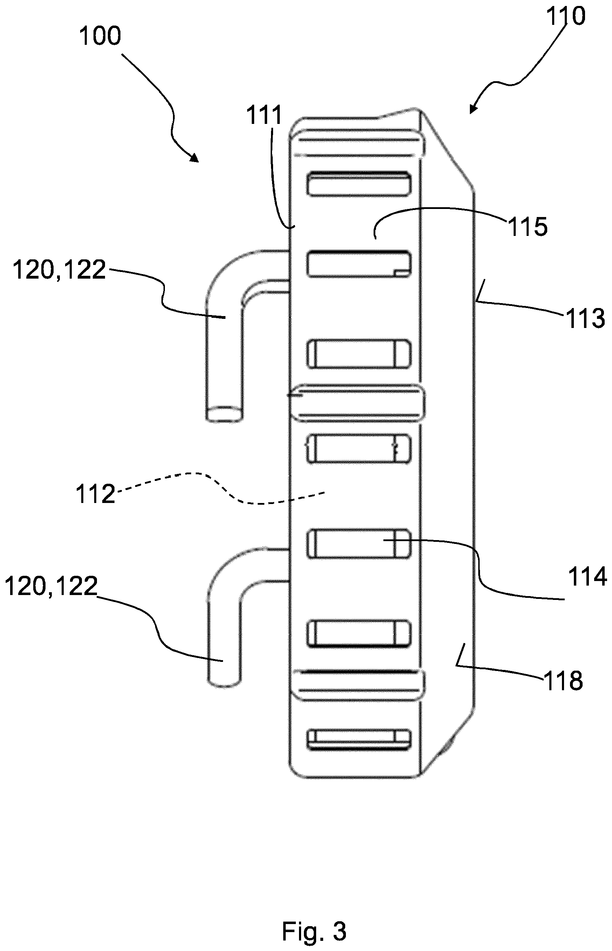

Die Figuren 1 bis 3 zeigen ein erstes Ausführungsbeispiel einer Schalldämpfungsanordnung 100. Hierbei zeigt Figur 1 eine Seitenansicht eines ersten Ausführungsbeispiels einer Scheibenbremsenanordnung 200 mit dem ersten Ausführungsbeispiel der Schalldämpfungsanordnung 100, Figur 2 zeigt eine Frontansicht der Scheibenbremsenanordnung 200 mit der Schalldämpfungsanordnung 100 und Figur 3 zeigt eine Fronansicht der Schalldämpfungsanordnung 100.

Wie aus den Figuren 1 bis 3 ersichtlich ist, weist das Gehäuse 110 im dargestellten ersten

Ausführungsbeispiel der Schalldämpfungsanordnung 100 am Gehäuseumfangswandabschnitt 115 mehrere Durchgangsöffnungen 114 auf. In einem alternativen, nicht dargestellten Ausführungsbeispiel der Schalldämpfungsanordnung 100 kann wenigstens eine Durchgangsöffnung 114 optional oder alternativ an wenigstens einer Gehäuseseitenwand 111, 113 angeordnet sein.

Wie aus den Figuren 1 bis 3 ersichtlich ist, ist das wenigstens eine Dämpfungsmittel 120 im dargestellten ersten Ausführungsbeispiel der Schalldämpfungsanordnung 100 als nach außen geschlossenes Rohr 122 ausführt, welches an dem Gehäuse 110 angeordnet und mit dem Gehäuseinnenraum 112 gekoppelt ist. Im dargestellten ersten Ausführungsbeispiel der Schalldämpfungsanordnung 100 sind zwei Rohre an einer Gehäuseseitenwand 111 angeordnet. In einem alternativen, nicht dargestellten Ausführungsbeispiel der Schalldämpfungsanordnung 100 kann lediglich ein Rohr 122 oder mehr als zwei Rohre 122 am Gehäuse 110 angeordnet werden. Zudem können optional oder alternativ auch an der anderen Seitenwand 113 oder am Gehäuseumfangswandabschnitt 115 Rohre 122 angeordnet werden. Die Rohre 122 sind als akustisch wirkende λ/4-Rohre ausgebildet. Hierbei ist ein dem Gehäuse 110 zugewandter Endbereich der Rohre 122 offen und ein dem Gehäuse 110 abgewandter Endbereich der Rohre 122 ist geschlossen. Die dargestellten Rohre 122 sind um neunzig Grad gebogen. Dadurch verläuft die Längserstreckung der Rohre 122 im Wesentlichen parallel zur Fläche der Gehäuseseitenwand 111, wodurch eine platzsparende Anordnung der Rohre 122 am Gehäuse 110 ermöglicht wird. In einem alternativen, nicht dargestellten Ausführungsbeispiel kann wenigstens ein Rohr 122 vom Gehäuse 110 abstehen oder in einem anderen Winkel gebogen sein. Die Luftsäule in den Rohren 122 kann zu Schwingungen angeregt werden, welche der Luftschallwelle im Gehäuseinnenraum 112 entgegenwirkt. Die Länge der Rohre 122 ist abhängig von den Wellenlängen der zu dämpfenden Luftschallwellen. Hierbei können die Rohre 122 unterschiedliche Längen aufweisen. Die dargestellten Rohre 122 weisen einen runden Querschnitt auf. Es sind aber auch andere Querschnitte vorstellbar. Die Rohre 122 können dasselbe Material aufweisen, wie das Gehäuse 110. Die Rohre 122 können an das Gehäuse 110 angeformt und/oder angeschweißt und/oder angeklebt und/oder angeschraubt werden. Alternativ können die Rohre 122 einteilig mit dem Gehäuse 110 hergestellt werden. Das Material der Rohre 122 kann Metall sein. Es ist auch Kunststoff möglich.

In einem alternativen, nicht dargestellten Ausführungsbeispiel kann auf der Innenseite des Gehäuses 110 vor den Durchgangsöffnungen 114 ein Filtermedium angeordnet sein, um beim Bremsen entstehende Partikel aus der durch die Durchgangsöffnungen 114 hindurchtretenden Luft herauszufiltern.

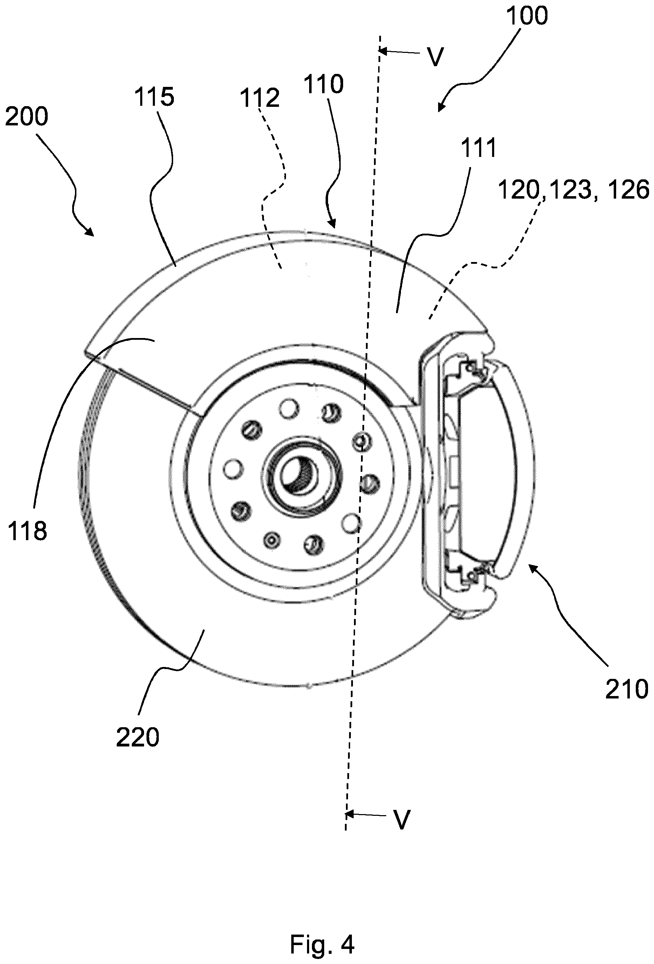

Figur 4 zeigt eine Seitenansicht eines zweiten und dritten Ausführungsbeispiels einer Scheibenbremsenanordnung 200 mit einem zweiten oder dritten Ausführungsbeispiel einer Schalldämpfungsanordnung 100, wobei das wenigstens eine Dämpfungsmittel 120 im Gehäuseinnenraum 112 angeordnet ist. Wie aus Figur 4 ersichtlich ist, weist das Gehäuse 110 im dargestellten zweiten und dritten Ausführungsbeispiel der Schalldämpfungsanordnung 100 keine Durchgangsöffnungen 114 auf. In einem alternativen, nicht dargestellten Ausführungsbeispiel der Schalldämpfungsanordnung 100 kann wenigstens eine Durchgangsöffnung 114 am Gehäuse 110 angeordnet sein

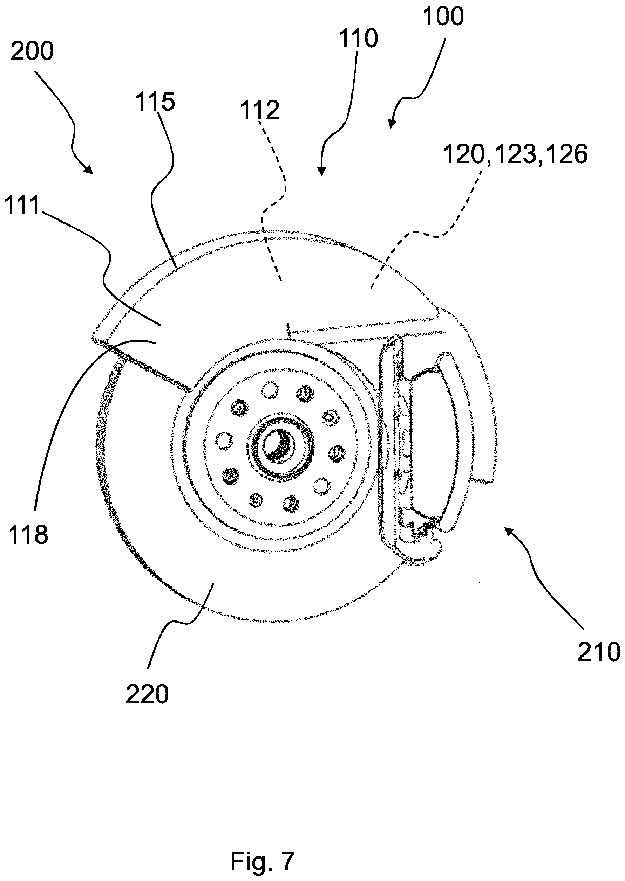

Figur 7 zeigt eine Seitenansicht eines vierten Ausführungsbeispiels einer Scheibenbremsenanordnung 200 mit einem vierten Ausführungsbeispiel einer Schalldämpfungsanordnung 100, wobei das wenigstens eine Dämpfungsmittel 120 im Gehäuseinnenraum 112 angeordnet ist. Wie aus Figur 7 ersichtlich ist, weist das Gehäuse 110 im dargestellten vierten Ausführungsbeispiel der Schalldämpfungsanordnung 100 keine Durchgangsöffnungen 114 auf. In einem alternativen, nicht dargestellten Ausführungsbeispiel der Schalldämpfungsanordnung 100 kann wenigstens eine Durchgangsöffnung 114 am Gehäuse 110 angeordnet sein. Das Gehäuse 110 erstreckt sich im dargestellten vierten Ausführungsbeispiel wenigstens teilweise über den Bremssattel 210.

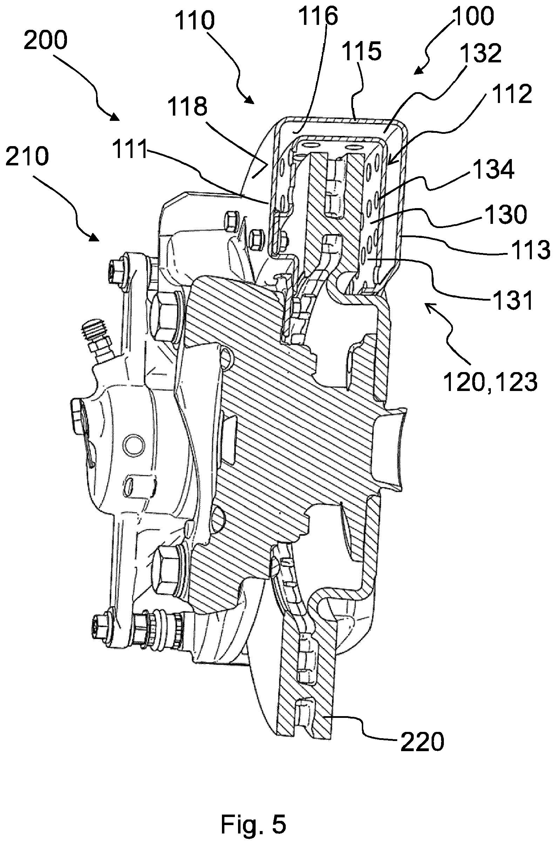

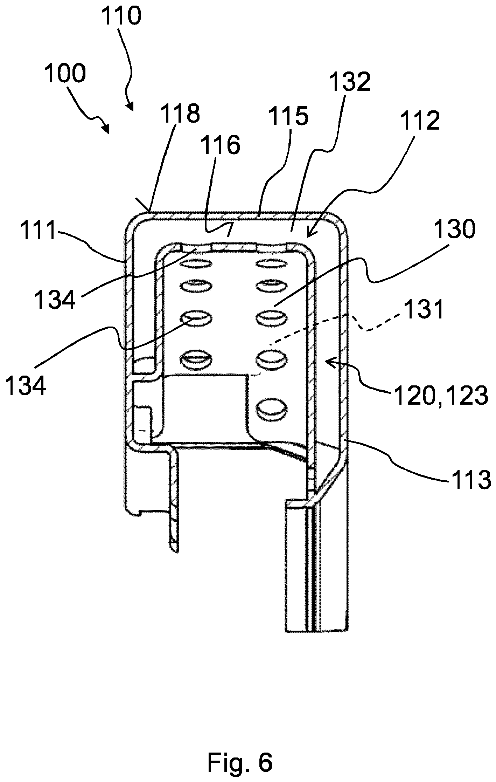

Figur 5 und 6 zeigen eine Schnittdarstellung des zweiten Ausführungsbeispiels der Schalldämpfungsanordnung 100. Wie aus Figur 5 und 6 ersichtlich ist, umschließt das Gehäuse 110 ein U-förmig ausgebildetes Innengehäuse 130, welches wenigstens eine Durchgangsöffnung 134 so aufweist, dass ein vom Innengehäuse 130 umgebener erster Innenraum 131 akustisch mit einem zweiten Innenraum 132 kommuniziert, welcher zwischen Innengehäuse 130 und Gehäuse 110 ausgebildet ist. Hierbei ist im zweiten Innenraum 132 wenigstens ein Breitbanddämpfer 123 als Dämpfungsmittel 120 ausgebildet. Das dargestellte Innengehäuse 130 umfasst mehrere Durchgangsöffnungen 134 welche an allen Wänden des Innengehäuses 130 angeordnet sind. In einem alternativen, nicht dargestellten Ausführungsbeispiel können die Durchgangsöffnungen 134 lediglich an einer Wand des Innengehäuses 130 angeordnet sein. Zudem kann das Innengehäuse 130 optional eine andere geeignete Form als die dargestellte U-Form aufweisen. Die Durchgangsöffnungen 134 können als längliche Schlitze oder als runde oder ovale oder eckige Öffnungen oder als Öffnungen mit anderem geeigneten Querschnitt ausgeführt sein. Weitere nicht dargestellte Zwischenwände können den zweiten Innenraum 132 in mehrere Kammern unterteilen. Hierbei können die Kammern unterschiedliche Volumen aufweisen. In dem zweiten Innenraum 132 bzw. in den Kammern können sich Luftsäulen ausbilden, welche von den Luftschallwellen angeregt werden und gegeneinander schwingen, so dass die Luftschellwellen in dem Gehäuseinnenraum 112 gedämpft werden können. Die Kammern können sich in ihren Volumen unterschieden, so dass die Luftsäulen verschiedene Volumen und dadurch verschiedene Eigenresonanzen aufweisen.

In einem alternativen, nicht dargestellten Ausführungsbeispiel kann anstelle eines Innengehäuses 130 lediglich eine Zwischenwand mit Durchgangsöffnungen 134 im Gehäuseinnenraum 112 angeordnet werden, welche benachbart zu einer der Gehäuseseitenwände 111, 115 oder benachbart zum Gehäuseumfangswandabschnitt 115 verläuft, so dass der zweite Innenraum 132 zwischen der Gehäuseseitenwand 111, 113 und der Zwischenwand oder zwischen dem Gehäuseumfangswandabschnitt 115 und der Zwischenwand entsteht. Hierbei ist der Zwischenraum nicht wie im dargestellten Ausführungseispiel U-förmig ausgeführt.

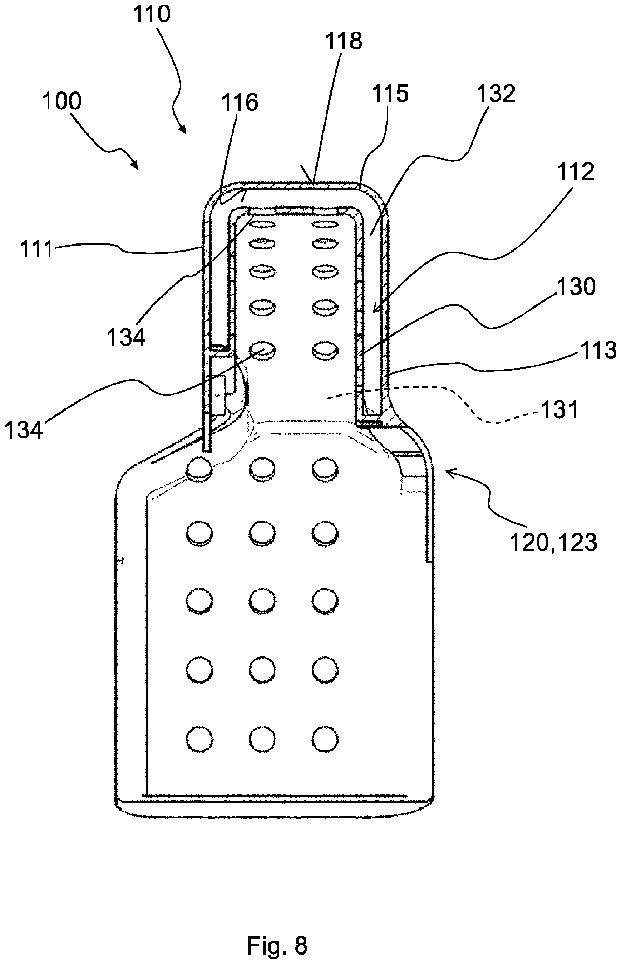

Figur 8 zeigt einen Schnitt durch einen über den Bremssattel 210 gezogenen Gehäuseabschnitt des vierten Ausführungsbeispiels der Schalldämpfungsanordnung 100. Das vierte Ausführungsbeispiel der Schalldämpfungsanordnung 100 unterscheidet sich von dem zweiten Ausführungsbeispiel der Schalldämpfungsanordnung 100 lediglich dadurch, dass sich das Gehäuse 110 über den Bremssattel 210 erstreckt und der Gehäuseinnenraum 112 entsprechend mehr Volumen aufweist, so dass der Breitbanddämpfer 123 mehr Volumen aufweist und dadurch weitere Kammern im zweiten Innenraum 132 aufweisen kann.

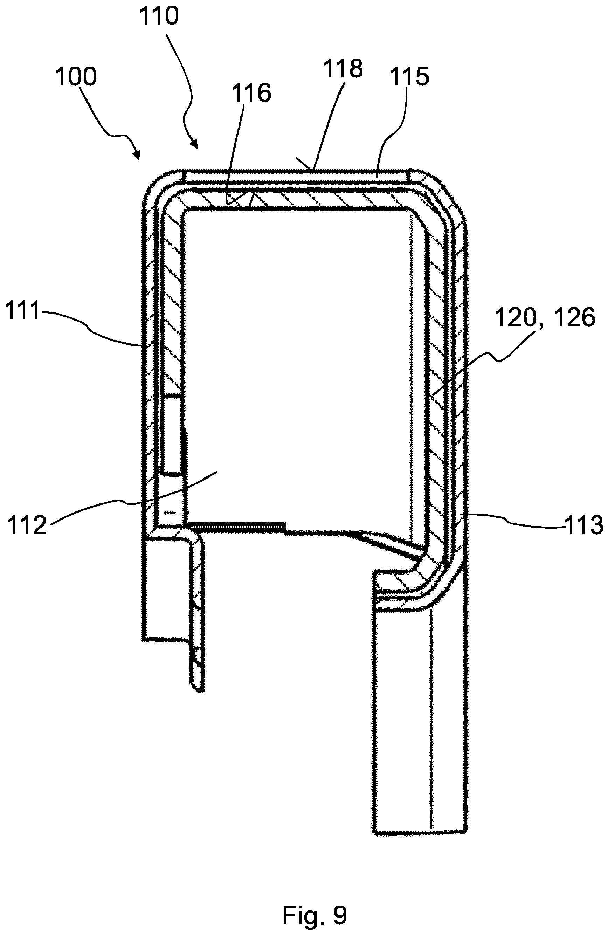

Figur 9 zeigt eine Schnittdarstellung des dritten Ausführungsbeispiels der Schalldämpfungsanordnung aus Figur 4. Wie aus Figur 9 weiter ersichtlich ist, umfasst das dritte Ausführungsbeispiel der Schalldämpfungsanordnung 100 ein akustisch wirksames Material 126, insbesondere ein Akustikvlies, welches an einer Innenseite 116 des Gehäuses 110 angeordnet ist. In einem alternativen, nicht dargestellten Ausführungsbeispiel kann das akustisch wirksame Material 126 zusätzlich an einer Außenseite 118 des Gehäuses 110 angeordnet werden. Beispielsweise kann bei einer zu dämpfenden Luftschalle mit 5000 Hz der Schallabsorptionskoeffizient Alpha eines akustisch wirksamen Materials mit einer Dicke von 10 mm größer als 0.2 (20%) sein.

In einem alternativen, nicht dargestellten Ausführungsbeispiel kann auf der Innenseite des Gehäuses 110 vor den Durchgangsöffnungen 114 ein Filtermedium angeordnet sein, um beim Bremsen entstehende Partikel aus der durch die Durchgangsöffnungen 114 hindurchtretenden Luft herauszufiltern.

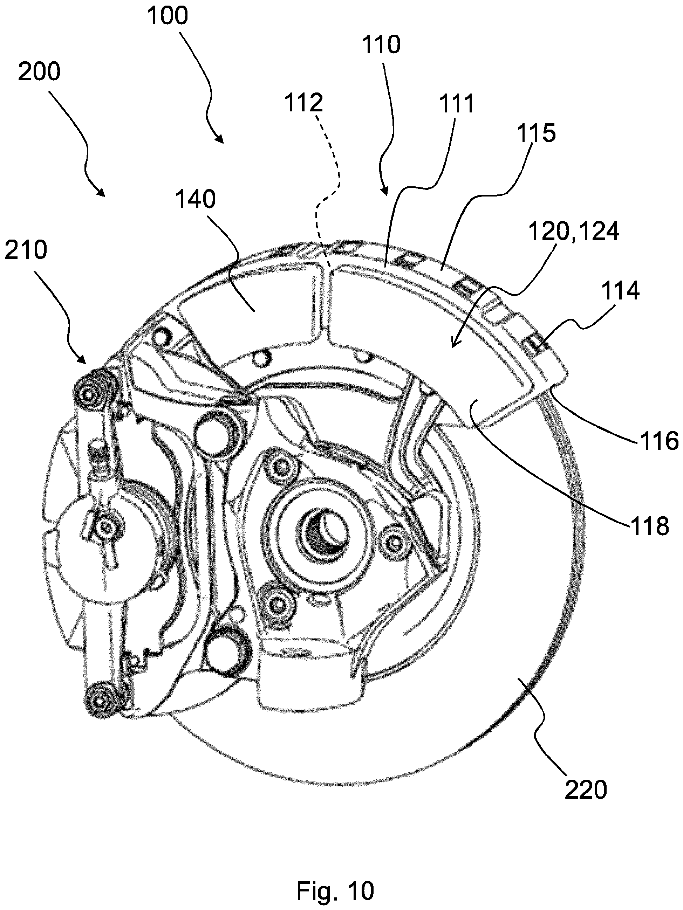

Die Figuren 10 bis 12 zeigen ein fünftes Ausführungsbeispiel einer Schalldämpfungsanordnung 100. Hierbei zeigt Figur 1 eine Seitenansicht eines fünften Ausführungsbeispiels einer Scheibenbremsenanordnung 200 mit dem fünften Ausführungsbeispiel der Schalldämpfungsanordnung 100, Figur 2 zeigt eine Frontansicht der Scheibenbremsenanordnung 200 mit der Schalldämpfungsanordnung 100 und Figur 3 zeigt eine Ansicht von oben auf die Schalldämpfungsanordnung 100.

Wie aus den Figuren 10 bis 12 ersichtlich ist, sind im dargestellten fünften Ausführungsbeispiel an dem Gehäuse 110 zwei Hohlkörper 140 angeordnet, welche jeweils wenigstens einen eine Durchgangsöffnung 144 zu dem vom Gehäuse 110 umschlossenen Gehäuseinnenraum 112 so aufweisen, dass ein Hohlraum 142 des jeweiligen Hohlkörpers 140 akustisch mit dem Gehäuseinnenraum 112 kommuniziert. Der Hohlraum 142 bildet hierbei mit der wenigstens einen Durchgangsöffnung 144 einen Helmholzresonator 124 als Dämpfungsmittel 120 aus. Die Hohlkörper 140 sind im dargestellten Ausführungsbeispiel an einer Seitenwand 111 angeordnet. In einem alternativen, nicht dargestellten Ausführungsbeispiel kann an der anderen Seitenwand 113 und/oder am Gehäuseumfangswandabschnitt 115 ebenfalls ein Hohlkörper 140 angeordnet werden. In einem weiteren alternativen, nicht dargestellten Ausführungsbeispiel der Schalldämpfungsanordnung 100 können mehr als zwei oder lediglich ein Hohlkörper 140 am Gehäuse 110 angeordnet werden. Zudem können die Hohlkörper 140 mehr als eine Durchgangsöffnung 144 aufweisen. Die Durchgangsöffnungen 144 sind im dargestellten fünften Ausführungsbeispiel rohrförmig ausgeführt. Es sind aber auch andere Ausführungen umsetzbar. Die beiden Hohlräume 142 unterscheiden sich insbesondere durch ihr Volumen. Die Durchgangsöffnungen 144 können sich in ihren Abmessungen unterscheiden. Die Luftschalldämpfung erfolgt, indem die Luftmasse in den Durchgangsöffnungen 144 gegen die Luftfeder im Hohlkörper 140 durch die Luftschallwelle im Gehäuseinnenraum 112 zum Schwingen angeregt wird. Hierbei wird Schallenergie der Luftschallwelle in kinetische Energie der schwingenden Luftmasse umgewandelt und die Luftschallwelle wird absorbiert. Da die Anregungsfrequenz der Luftmasse in den jeweiligen Durchgangsöffnungen unteranderen von deren Abmessungen abhängig ist und die Federkraft der Luftfeder unteranderen vom Volumen des korrespondierenden Hohlraums 142 abhängt, können diese Parameter so eingestellt werden, dass Luftschallwellen mit einer bestimmten Frequenz absorbiert werden. Zusätzlich kann die Luftmasse in den Durchgangsöffnungen 144 durch Reibung gebremst werden. Zu diesem Zweck kann ein dünnes Vlies, optional versehen mit einer zusätzlichen Auflage aus Mineralwolle oder Schaumstoff, zwischen der Durchgangsöffnung 144 und dem Hohlraum 142 oder in der Durchgangsöffnung 144 angeordnet werden.

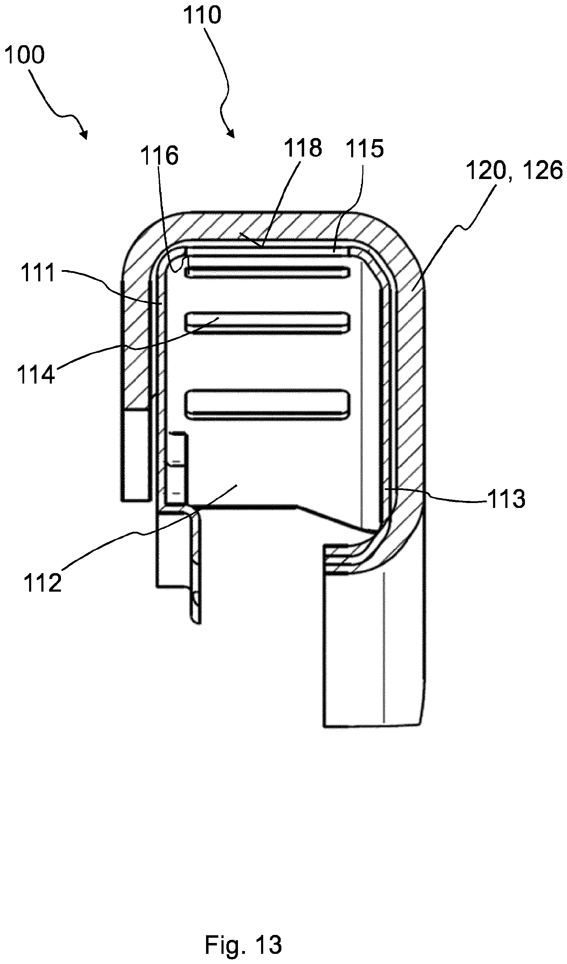

Figur 13 zeigt eine Schnittdarstellung des sechsten Ausführungsbeispiels der Schalldämpfungsanordnung. Wie aus Figur 13 weiter ersichtlich ist, umfasst das sechste Ausführungsbeispiel der Schalldämpfungsanordnung 100 ein akustisch wirksames Material 126, insbesondere ein Akustikvlies, welches an einer Außenseite 118 des Gehäuses 110, angeordnet ist. Das Gehäuse 110 weist am Gehäuseumfangswandabschnitt 115 Durchgangsöffnungen 114 auf, so dass sich die Luftschallwellen vom Gehäuseinnenraum 112 zu dem akustisch wirksamen Material 126 hin ausbreiten können. Beispielsweise kann bei einer zu dämpfenden Luftschallwelle mit 5000 Hz der Schallabsorptionskoeffizient Alpha eines akustisch wirksamen Materials mit einer Dicke von 10 mm, größer als 0.2 (20%) sein.

In einem alternativen, nicht dargestellten Ausführungsbeispiel kann auf der Innenseite des Gehäuses 110 vor den Durchgangsöffnungen 114 ein Filtermedium angeordnet sein, um beim Bremsen entstehende Partikel aus der durch die Durchgangsöffnungen 114 hindurchtretenden Luft herauszufiltern.

In einem alternativen, nicht dargestellten Ausführungsbeispiel können die Rohre 122 des ersten Ausführungsbeispiels der Schalldämpfungsanordnung 100 mit den anderen Ausführungsbeispielen kombiniert werden.

In einem weiteren alternativen, nicht dargestellten Ausführungsbeispiel kann das Gehäuse 110 des vierten Ausführungsbeispiels der Schalldämpfungsanordnung 100 aus Figur 7 mit den anderen Ausführungsbeispielen kombiniert werden.

In einem weiteren alternativen, nicht dargestellten Ausführungsbeispiel können die akustisch wirksamen Materialien 126 des dritten und/oder des sechsten Ausführungsbeispiels der Schalldämpfungsanordnung 100 mit den anderen Ausführungsbeispielen kombiniert werden. Hierbei kann das akustisch wirksame Material 126 in allen vorhandenen Volumen 112, 122, 123, 124, 131, 132, 140 und/oder an allen vorhandenen Wänden 111, 113, 115, 130, und/oder an allen vorhandenen Durchgangsöffnungen 114, 134 angeordnet werden.

Günstigerweise kann bei allen Varianten auf oder im Gehäuse 110 an geeigneten Durchgangsöffnungen ein Filtermedium angeordnet sein, um beim Bremsen entstehende Partikel aus der durch die Durchgangsöffnungen hindurchtretenden Luft herauszufiltern.

### Bezugszeichen

- 100: Schalldämpfungsanordnung
- 110: Gehäuse
- 112: Gehäuseinnenraum
- 111, 113, 115: Gehäusewand
- 114: Durchgangsöffnung
- 116: Innenseite
- 118: Außenseite
- 120: Dämpfungsmittel
- 122: Rohr
- 123: Breitbanddämpfer
- 124: Helmholzresonator
- 126: akustisch wirksames Material
- 130: Innengehäuse
- 131: erster Innenraum
- 132: zweiter Innenraum
- 134: Durchgangsöffnung
- 140: Hohlkörper
- 142: Hohlraum
- 144: Durchgangsöffnung
- 200: Scheibenbremsenanordnung
- 210: Bremssattel
- 220: Bremsscheibe

## Patentansprüche

1. Schalldämpfungsanordnung (100) für eine einen Bremssattel (210) und eine Bremsscheibe (220) umfassende Scheibenbremsenanordnung (200), mit einem Gehäuse (110) mit Gehäusewänden (111, 113, 115) zur zumindest teilweisen Aufnahme der Bremsscheibe (220) in einem Gehäuseinnenraum (112), wobei das Gehäuse (110) die Bremsscheibe (220) im Wesentlichen U-förmig umschließt, wobei Gehäuseseitenwände (111, 113) sich parallel zur Bremsscheibe (220) erstrecken und ein zwischen den Gehäuseseitenwänden (111, 113) angeordneter Gehäuseumfangswandabschnitt (115) sich radial außen in Umfangsrichtung des Gehäuses (110) erstreckt, wobei wenigstens einem Dämpfungsmittel (120) zur Dämpfung von Luftschallwellen an dem Gehäuse (110) angeordnet ist.

2. Schalldämpfungsanordnung nach Anspruch 1, wobei das Gehäuse (110) einen Partikelfilter aufweist, der bevorzugt ein Partikelfiltermedium aufweist, das zumindest einen Teil einer inneren Oberfläche des Gehäuses (110) auskleidet.

3. Schalldämpfungsanordnung nach Anspruch 1 oder 2, wobei das wenigstens eine Dämpfungsmittel (120) als nach außen geschlossenes Rohr (122) ausführt ist, welches an dem Gehäuse (110) angeordnet und mit dem Gehäuseinnenraum (112) gekoppelt ist, insbesondere wobei sich das wenigstens eine Rohr (122) als akustisch wirkendes λ/4-Rohr ausgebildet ist.

4. Schalldämpfungsanordnung nach einem der Ansprüche 1 bis 3, wobei an dem Gehäuse (110) wenigstens ein Hohlkörper (140) angeordnet ist, insbesondere an wenigstens einer Seitenwand (111, 113) angeordnet ist, der wenigstens eine Durchgangsöffnung (142) zu dem vom Gehäuse (110) umschlossenen Gehäuseinnenraum (112) so aufweist, dass ein Hohlraum (142) des Hohlkörpers (140) akustisch mit dem Gehäuseinnenraum (112) kommuniziert, insbesondere wobei der Hohlraum (142) mit der Durchgangsöffnung (142) als Helmholtzresonator (124) als Dämpfungsmittel (120) ausgebildet ist.

5. Schalldämpfungsanordnung nach einem der vorhergehenden Ansprüche, wobei an einer Innenseite (116) und/oder Außenseite (118) des Gehäuses (110) wenigstens ein akustisch wirksames Material (126) angeordnet ist.

6. Schalldämpfungsanordnung nach einem der vorhergehenden Ansprüche, wobei das Gehäuse (110) ein Innengehäuse (130) umschließt, welches wenigstens eine Durchgangsöffnung (134) so aufweist, dass ein vom Innengehäuse (130) umgebener erster Innenraum (131) akustisch mit einem zweiten Innenraum (132) kommuniziert, welcher zwischen Innengehäuse (130) und Gehäuse (110) ausgebildet ist, wobei im zweiten Innenraum (132) wenigstens ein Breitbanddämpfer (123) als Dämpfungsmittel (120) ausgebildet ist.

7. Schalldämpfungsanordnung nach einem der vorhergehenden Ansprüche, wobei der Gehäuseumfangswandabschnitt (115) wenigstens eine Durchgangsöffnung (114) aufweist.

8. Schalldämpfungsanordnung nach einem der vorhergehenden Ansprüche, wobei das Gehäuse (110) sich wenigstens teilweise über den Bremssattel (210) erstreckt.

9. Scheibenbremsenanordnung (200) mit einem Bremssattel (210), einer Bremsscheibe (220) und einer Schalldämpfungsanordnung (100), wobei die Schalldämpfungsanordnung (100) nach einem der vorhergehenden Ansprüche ausgeführt ist.
